# EUROPÄISCHE PATENTSCHRIFT

(11) **EP 2 481 098 B1**
(45) Veröffentlichungstag und Bekanntmachung des Hinweises auf die Patenterteilung: **18.07.2018**
(21) Anmeldenummer: 10743156.1
(22) Anmeldetag: 18.08.2010
(51) Int. Cl.: H01L 31/18

(54) **VERFAHREN ZUR BELASTUNG VON PHOTOVOLTAIKMODULEN**
METHOD FOR APPLYING STRESS TO PHOTOVOLTAIC MODULES
PROCÉDÉ POUR APPLIQUER DES CONTRAINTES SUR DES MODULES PHOTOVOLTAÏQUES

(30) Priorität: 25.09.2009 DE 102009045015
(43) Veröffentlichungstag der Anmeldung: 01.08.2012
(73) Patentinhaber: Deutsche Landwirtschafts-Gesellschaft E.V., 60489 Frankfurt am Main (DE)
(72) Erfinder: HUSCHKE, Wolfram, 14476 Potsdam (DE); SÖGDING, Thorsten, 76829 Landau (DE); WEBER, Urban, 55413 Weiler bei Bingen (DE)
(74) Vertreter: Isarpatent
(86) Internationale Anmeldenummer: PCT/EP2010/062060
(87) Internationale Veröffentlichungsnummer: WO 2011/035997

(56) Entgegenhaltungen:
- EP-A2- 0 562 517
- SAMPLE T. ET AL.: "Accelerated Ageing of Seven Different Thin-Film Module Types by Sequential Exposure to Damp Heat or Damp Heat with either Additional Applied Voltage or Ultraviolet Light", PROCEEDINGS OF THE 24TH EUROPEAN PHOTOVOLTAIC SOLAR ENERGY CONFERENCE, HAMBURG, GERMANY, 21. September 2009 (2009-09-21), - 25. September 2009 (2009-09-25), Seiten 3241-3247, XP002673549, ISBN: 3-936338-25-6
- JOL J C ET AL: "TOWARDS A CE MARK FOR PV BUILDING INTEGRATED SYSTEMS", 16TH. E.C. PHOTOVOLTAIC SOLAR ENERGY CONFERENCE. GLASCOW, UNITED KINGDOM, Bd. CONF. 16, 1. Mai 2000 (2000-05-01), - 5. Mai 2000 (2000-05-05), Seiten 1994-1997, XP001139058, LONDON : JAMES & JAMES LTD, GB ISBN: 978-1-902916-18-7
- WOHLGEMUTH J.H. ET AL.: "Using Accelerated Tests and Field Data to Predict Module Reliability and Lifetime", PROCEEDINGS OF THE 23RD EUROPEAN PHOTOVOLTAIC SOLAR ENERGY CONFERENCE, VALENCIA, SPAIN, 1. September 2008 (2008-09-01), - 5. September 2008 (2008-09-05), Seiten 2663-2669, XP002673550, ISBN: 3-936338-24-8
- ALAN R HOFFMAN ET AL: "Qualification Testing of Flat-Plate Photovoltaic Modules", IEEE TRANSACTIONS ON RELIABILITY, Bd. R-13, Nr. 3, 1. August 1982 (1982-08-01), Seiten 252-257, XP011274782, IEEE SERVICE CENTER, PISCATAWAY, NJ, US ISSN: 0018-9529
- PROBST V ET AL: "New developments in Cu(In,Ga)(S, Se)2 thin film modules formed by rapid thermal processing of stacked elemental layers", SOLAR ENERGY MATERIALS AND SOLAR CELLS, Bd. 90, Nr. 18-19, 23. November 2006 (2006-11-23), Seiten 3115-3123, XP025142915, ELSEVIER SCIENCE PUBLISHERS, AMSTERDAM, NL ISSN: 0927-0248, DOI: 10.1016/J.SOLMAT.2006.06.031 [gefunden am 2006-11-23]

## Beschreibung

Die vorliegende Erfindung betrifft ein Verfahren zur Belastung von Photovoltaikmodulen.

Aus Sample T. et al.: "Accelerated Ageing of Seven Different Thin-Film Module Types by Sequential Exposure to Damp Heat or Damp Heath with either Additional AppliedVoltage or Ultraviolet Light", PROCEEDINGS OF THE 24TH EUROPEAN PHOTOVOLTAIC SOLAR ENERGY CONFERENCE, HAMBURG, GERMANY, 21. September 2009 ist ein Verfahren zur Belastung von Photovoltaikmodulen bekannt, wobei ein Photovoltaikmodul in eine Probenraumkammer eingebracht wird, die während eines Belastungszeitraums von 24 - 5000 Stunden einen Atmosphäre mit Eigenschaften aufweist, welche diejenigen Einflüsse simulieren denen das Photovoltaikmodul während seines Einsatzes ausgesetzt sein kann, und wobei unter diesen Eigenschaften folgende sind: eine Temperatur im Bereich von 50°C bis 95°C und eine mittlere, relative Luftfeuchtigkeit von 60% bis 90%.

Die EP 0 567 517 A2 beschreibt eine Solarzelle mit einer Polymerschutzschicht und ein entsprechendes Herstellungsverfahren.

JOL J C et al.: "Towards a Ce Mark for PV Building Integrated Systems", 16TH. E. C. PHOTOVOLTAIC SOLAR ENERGY CONFERENCE. GLASGOW, UNITED KINGDOM, Bd. Conf. 16, 1. Mai 2000 beschreibt ein PV-Testsystem.

Im Folgenden sind die Begriffe "Photovoltaikmodul", "PV-Modul", "Solarmodul" und "Modul" synonym. "Probenraum" und "Probenkammer" haben ebenfalls dieselbe Bedeutung.

In Zeiten, in denen die Nachfrage nach Photovoltaikmodulen besonders hoch ist, müssen die Hersteller von Modulkomponenten, wie Solarzellen, Abdeckfolien, Deckgläsern usw. große Anstrengungen unternehmen, um den großen Bedarf dieser Bauteile zu decken. Die Qualität der Bauteile kann durch unzureichende Sorgfalt bei Herstellung und Materialauswahl beeinträchtigt sein. Dabei kann die Mangelhaftigkeit nur eines der genannten Bauteile den Wirkungsgrad des daraus hergestellten Photovoltaikmoduls bereits stark vermindern. Es ist zu berücksichtigen, dass Mängel oft erst lange Zeit nach der Herstellung eines Photovoltaikmoduls zu Tage treten. Dies liegt unter anderem daran, dass ein Photovoltaikmodul starken Temperatur- und Luftfeuchtigkeitsschwankungen ausgesetzt ist, die erst nach und nach zu einer Degradation der verwendeten Materialien führen.

Der Markt verlangt vom Hersteller von Photovoltaikmodulen eine Prognose für die voraussichtliche Haltbarkeit des Moduls. Maßgebend ist, wie sich der Wirkungsgrad des Photovoltaikmoduls während seines Einsatzes verändert. Da die Lebensdauer eines Photovoltaikmoduls aufgrund der hohen Anschaffungskosten wenigstens 20 Jahre betragen sollte, müssen sinnvolle Prognosen auf einen solch langen Zeitraum abstellen. Zusätzlich erschwert wird die Erstellung einer guten Prognose dadurch, dass fortwährend versucht wird, die Eigenschaften der Photovoltaikmodule zu verbessern, wodurch sie laufend Veränderungen unterworfen sind. Folglich ist es für den Hersteller von Photovoltaikmodulen dringend geboten, aussagekräftige Testverfahren zu entwickeln, die geeignet sind, die erwähnten Prognosen zu stützen und auch bei ungewisser Qualität der Ausgangsbauteile eine sinnvolle Aussage zur Beeinträchtigung der Materialien zu ermöglichen.

Aus diesem Grund sind bereits verschiedene Tests etabliert, die z.B. standardmäßig im Rahmen der Norm IEC 61215 durchgeführt werden. Unter diesen Tests sind Testverfahren, die den Einfluss von UV-Bestrahlung, Klimawechsel, Wärme/Feuchte, Freilandbewitterung und mechanische Belastung ermitteln. Diese Tests decken zwar einen Großteil der im Feld zu erwartenden Belastungen ab, nicht jedoch die besonderen Belastungen, die ein Photovoltaikmodul erfährt, wenn es im landwirtschaftlichen Bereich zum Einsatz kommt.

Die Landwirtschaft hat sich zu einem Großabnehmer für Photovoltaikmodule entwickelt, da Landwirte vielfach über große Dachflächen, beispielsweise auf Viehställen, verfügen, welche durch Photovoltaikmodule sinnvoll genutzt werden können. Allerdings sind die Photovoltaikmodule hier besonderen Belastungen ausgesetzt. Vieh erzeugt Gase, die potentiell schädigenden bzw. korrosiven Charakter haben und somit die Photovoltaikmodule schädigen können.

Die etablierten Belastungstests simulieren überwiegend physikalische Belastungen, wie elektromagnetische Strahlung, Temperatur, Luftfeuchtigkeit und mechanische Belastung. Chemische Einflussfaktoren werden außer Acht gelassen.

Es besteht daher ein großer Bedarf, Verfahren und Vorrichtungen bereitzustellen, die es ermöglichen, die Belastungen durch die korrosive Atmosphäre auf Photovoltaikmodule in landwirtschaftlichem Umfeld zu simulieren, so dass eine Prognose zur Wirkungsgradentwicklung des Moduls für wenigstens 20 Jahre möglich ist.

Es ist daher die Aufgabe der vorliegenden Erfindung, ein Verfahren bereitzustellen, die die Belastungen eines Solarmoduls in landwirtschaftlichem Umfeld simulieren. Das Verfahren soll dabei eine Prognose der Verschlechterung der Moduleigenschaften über einen Zeitraum von wenigstens 20 Jahren erlauben.

Ein erfindungsgemäßes Verfahren ist in Patentanspruch 1 definiert.

Bei dem erfindungsgemäßen Verfahren handelt es sich um ein Verfahren zur Belastung von Photovoltaikmodulen, wobei ein Photovoltaikmodul in eine Probenkammer eingebracht wird, die während eines Belastungszeitraumes eine Atmosphäre mit Eigenschaften aufweist, welche diejenigen Einflüsse simulieren, denen das Photovoltaikmodul während seines Einsatzes ausgesetzt sein kann, und wobei unter diesen Eigenschaften folgende sind:
a) eine Temperatur im Bereich von 50°C bis 95°C,
b) eine relative Luftfeuchtigkeit von 60% bis 90% und
c) eine Ammoniakkonzentration von 250 bis 50.000 ppm, vorzugsweise bis 5.000 ppm.

Auf einem gewöhnlichen Viehstalldach in Mitteleuropa liegt die mittlere Jahrestemperatur bei etwa 12°C, allerdings kann die Temperatur bei Sonneneinstrahlung auf ca. 50-60°C ansteigen - in Mitteleuropa statistisch ca. 1000 h pro Jahr), die mittlere Luftfeuchtigkeit bei etwa 80%, und der Gehalt der Atmosphäre mit Ammoniak bei bis zu 20 ppm. 20 ppm Ammoniakkonzentration entsprechen der maximal zulässigen Konzentration in der Abluft eines Viehstalls.

Im Verfahren der vorliegenden Erfindung liegt die Temperatur im Probenraum zwischen 50°C und 95°C, weil durch Erhöhung der Temperatur gegenüber der in Mitteleuropa durchschnittlichen Jahrestemperatur von 12°C eine Verkürzung der Belastungsdauer ermöglicht wird. Es wurde festgestellt, dass durch Erhöhung der Temperatur die Verkürzung des Belastungszeitraums wesentlich größer sein darf als bei Veränderung der anderen Parameter. Bevorzugte Ausführungsformen des Verfahrens der Erfindung sehen daher eine Temperatur von 60°C bis 80°C vor, besonders bevorzugt sind 65°C bis 75°C. Obwohl unter Realbedingungen natürlich teilweise erhebliche Temperaturschwankungen auftreten, hat es sich gezeigt, dass das Belastungsverfahren dieser Anmeldung bevorzugt ohne solche Schwankungen und vielmehr mit einer im Wesentlichen konstanten Temperatur auskommt. Dies verringert auch den Überwachungsaufwand der Belastungsvorrichtung. Die mittlere, relative Luftfeuchtigkeit liegt bevorzugt bei 65% bis 75% und am meisten bevorzugt bei 70%. Die relative Luftfeuchtigkeit ist somit geringer, aber die absolute Luftfeuchtigkeit höher, weshalb die Belastung höher ist.

Ähnliche Überlegungen betreffen die Ammoniakkonzentration von 250 bis 5000 ppm, die gegenüber den maximal zulässigen Konzentrationen in der Abluft eines Viehstalls deutlich erhöht sind. In bevorzugten Ausführungsformen liegt die Ammoniakbelastung bei 500 bis 1000 ppm, besonders bevorzugt bei etwa 750 ppm. Jedoch sind bei Schnelltests von typischerweise 24 h Konzentrationen bis 50.000 ppm möglich.

Durch eine gemäß der vorliegenden Erfindung gewählte Atmosphäre der Probenkammer kann ein Belastungszeitraum realisiert werden, der 5000 Stunden bevorzugt nicht überschreitet. Damit kann binnen verhältnismäßig kurzer Zeit die Belastung eines Photovoltaikmoduls während 20 Jahren Betriebsdauer in landwirtschaftlichem Umfeld simuliert werden, so dass in der Folge die Ermittlung der Belastbarkeit den Markteintritt eines bestimmten Produktes nicht wesentlich hinauszögert.

Gleichwohl sollte der Belastungszeitraum bevorzugt wenigstens 500 Stunden umfassen, damit sichergestellt ist, dass die langwierige Diffusion des Ammoniaks in die inneren Modulkomponenten abgeschlossen ist und die inneren Modulkomponenten nicht einem anderen Belastungsszenario ausgesetzt sind als die äußeren Modulkomponenten.

Ein Photovoltaikmodul, das den erfindungsgemäßen Prozess durchlaufen hat, ist, insoweit die Degradation insbesondere der Kunststoff- und Glasbestandteile betroffen ist, mit einem Photovoltaikmodul vergleichbar, das 20 Jahre auf einem Viehstall eingesetzt wurde.

In bevorzugten Ausführungsformen umfasst der Belastungszeitraum 1250 bis 1750 Stunden. Der Belastungszeitraum ist erfindungsgemäß die Zeitspanne, während der das zu untersuchende Photovoltaikmodul im Probenraum angeordnet ist und die dort vorhandene Atmosphäre wie im erfindungsgemäßen Testverfahren beschrieben vorliegt. In besonders bevorzugten Ausführungsformen des erfindungsgemäßen Verfahrens beträgt der Belastungszeitraum etwa 1500 Stunden.

Der Probenraum, in den das Photovoltaikmodul eingebracht wird, kann jede ausreichend dichte Kammer sein, innerhalb derer die für das Testverfahren erforderlichen Eigenschaften wirtschaftlich eingestellt werden können. Aufgrund der toxikologischen Bedenklichkeit des Ammoniaks wird der Probenraum also im Wesentlichen vollständig abgedichtet sein und bevorzugt wenigstens eine Zuleitung aufweisen.

Ein besonders bevorzugter Probenraum umfasst eine Wärmedämmung, damit die Heizkosten der Anlage möglichst gering sind.

Bevorzugt ist der Probenraum mit einer separaten mikroprozessorgesteuerten Steuerung- und Überwachungseinheit ausgestattet, die es erlaubt, die Eigenschaften der Atmosphäre im Probenraum fortwährend zu kontrollieren.

In bevorzugten Ausführungsformen ist der Probenraum durch Wandungen aus Edelstahl begrenzt. Bevorzugte Abmessungen sind eine Höhe von 1000 mm bis 2000 mm, bevorzugt 1500 mm; eine Breite von 1000 mm bis 2000 mm, bevorzugt 1500 mm und eine Tiefe von 1000 mm bis 3000 mm, bevorzugt 2000 mm. Damit lässt sich ein bevorzugtes Volumen von 2500 bis 7000 l, bevorzugt etwa 4500 l realisieren.

Zur Aufnahme der Module wird bevorzugt ein Gestell genutzt. Die Module werden bevorzugt mit der Längsseite nach unten leicht gekippt (bevorzugt bis zu 10°) und mit einer Bodenfreiheit von bevorzugt ca. 100 mm eingestellt.

Die Probenkammer stellt bevorzugt eine Begasungskammer mit voreinstellbarer Temperatur, Feuchtigkeit und NH₃-Gaskonzentration dar. Zur Dokumentation der Prüfraumparameter wird bevorzugt ein PC-Datenerfassungssystem eingesetzt.

Die Probenkammer weist bevorzugt die folgenden Hauptbaugruppen auf:
1. Heizsystem
   Das Heizsystem besteht bevorzugt aus zwei unabhängigen Heizsystemen, um die Temperaturhomogenität innerhalb der Kammer sicherzustellen, einem Warmwasserheizsystem mit Rippenrohrheizkörper und einem Register von speziellen Elektroheizelementen mit Lüfter (15 Stück). Der Heizkörper und sämtliche Heizlüfter sind bevorzugt an der Kammerrückseite montiert.
   Die Wasserspeisung erfolgt bevorzugt aus dem Trinkwassernetz und weiter bevorzugt über einen Ionenaustauscher.
2. Gaszuführsystem
   Die Gaszuführung erfolgt geregelt. Für die Erzeugung der Feuchtluft wird bevorzugt Druckluft in einem bevorzugt beheizten Wasserbehälter befeuchtet und dann bevorzugt mit Trockenluft gemischt. Für die Dosierung von feuchter bzw. trockener Luft werden bevorzugt Mass-Flow-Controller für Gase eingesetzt. Ammoniak wird bevorzugt aus einer Gasflasche über Druckminderer, Filter, Rückschlagventil durch einen Mass-Flow-Controller für Gase (ammoniakbeständig) dosiert zur Verfügung gestellt. Beide Gasströme werden bevorzugt zuerst gemischt und dann der Probenkammer zugeführt.
3. Gasabführsystem
   Die Gasabführung erfolgt durch eine Absauganlage, die bevorzugt einen Katalysator, weiter bevorzugt zusätzlich einen Kondensatabscheider und ferner bevorzugt zusätzlich einen Abluftventilator umfasst.
4. Messsysteme
   Für die Messung der Gastemperatur- und feuchte wird ein für die Umgebungsbedingungen geeignetes Messsystem verwendet. Zur Überwachung der NH₃-Gaskonzentration in der Probenkammer wird bevorzugt ein IR-Spektrometer eingesetzt.

Um Aussagen über die Belastbarkeit eines Photovoltaikmoduls ausgehend von der simulierten Belastung gemäß dem Verfahren der vorliegenden Erfindung zu treffen, müssen bestimmte Eigenschaften des Photovoltaikmoduls vor und nach der Belastungssimulation durchgeführt werden. Im Folgenden werden einige Prüfungen beschrieben, die bevorzugt vor und nach dem Verfahren der vorliegenden Erfindung durchgeführt werden.

Die Erfindung betrifft bevorzugt ferner ein Verfahren, das ein Verfahren zur Ermittlung der Belastbarkeit von Photovoltaikmodulen darstellt und zusätzlich zu den Verfahrensschritten, die das Belastungsverfahren kennzeichnen, auch einen oder mehrere vor- und/oder nachgeschalteten Prüfungsschritt umfasst, der aus den nachfolgend beschriebenen Prüfungen ausgewählt ist. Bevorzugt wird dabei ein Prüfungsschritt, der vor dem Belastungsverfahren durchgeführt wird, auch nach dem Belastungsverfahren durchgeführt, so dass Aussagen über die Belastbarkeit des Moduls getroffen werden können.

Bevorzugte Ausführungsformen des Verfahrens zur Ermittlung der Belastbarkeit umfassen eine dem Belastungsverfahren vorgeschaltete Isolationsprüfung und eine dem Belastungsverfahren nachgeschaltete Isolationsprüfung, so dass sich eine Sequenz der Form Isolationsprüfung-Belastungsverfahren-Isolationsprüfung. Analoge Verfahren, bei denen dem Belastungsverfahren eine Prüfung des Isolationswiderstandes unter Benässung oder eine Bestimmung der maximalen Leistung vor- und nachgeschaltet sind, sind ebenfalls erfindungsgemäß bevorzugt. Die hier genannten Prüfungen werden bevorzugt im Wesentlichen so ausgeführt, wie es nachfolgend beschrieben ist:

### Isolationsprüfung

Die Isolationsprüfung dient dem Zweck, nachzuweisen, dass das Photovoltaikmodul bzw. seine stromführenden Teile ausreichend gegenüber dem Modulrahmen und der Umwelt isoliert sind.

Die Prüfeinrichtung umfasst eine Gleichspannungsquelle mit Strombegrenzung, die eine Spannung von 500 V oder 1000 V zzgl. dem Zweifachen der höchsten Systemspannung des Photovoltaikmoduls bereitstellt. Die höchste Systemspannung des Photovoltaikmoduls ist die vom Hersteller angegebene maximale Systemspannung des Moduls. Ferner umfasst die Prüfeinrichtung ein Messgerät zur Messung des Isolationswiderstandes.

Während der Prüfung muss das Photovoltaikmodul bei einer Umgebungstemperatur gemäß IEC 60068-1 und einer relativen Luftfeuchtigkeit von nicht über 75% gehalten werden.

Während der Prüfung werden die kurzgeschlossenen Ausgangsanschlüsse des Photovoltaikmoduls mit dem Pluspol eines Gleichstromisolationsprüfers mit Strombegrenzung verbunden. Die freiliegenden Metallteile des Photovoltaikmoduls sind mit dem Minuspol des Isolationsprüfers zu verbinden. Besitzt des Photovoltaikmodul keinen Rahmen oder ist der Rahmen ein schlechter elektrischer Leiter, müssen um die Kanten und über die Rückseite des Photovoltaikmoduls eine metallische Folie gelegt werden. Diese Folie ist mit dem Minuspol des Isolationsprüfers zu verbinden. Die mittels des Isolationsprüfers angelegte Spannung ist mit einer Anstiegsgeschwindigkeit von höchstens 500 V/s auf einen Höchstwert von 1000 V plus der doppelten maximalen Systemspannung zu erhöhen.

Wenn die maximale Systemspannung nicht größer als 50 V ist, muss die angelegte Spannung 500 V betragen. Diese Spannung muss eine Minute anliegen.

Dann wird die angelegte Spannung auf 0 verringert und die Pole der Prüfeinrichtung werden kurzgeschlossen, um die im Photovoltaikmodul aufgebaute Spannung zu entladen. Dann wird der Kurzschluss aufgehoben.

Dann wird an das Photovoltaikmodul mit der Prüfeinrichtung eine Spannung von 500 V oder der maximalen Systemspannung, je nachdem welche Spannung größer ist, angelegt. Die Anstiegsgeschwindigkeit ist dabei nicht über 500 V/s. Diese Spannung muss zwei Minuten anliegen. Anschließend ist der Isolationswiderstand zu bestimmen.

Dann wird die anliegende Spannung auf 0 verringert und die Anschlussklemmen der Prüfeinrichtung werden kurzgeschlossen, um die im Photovoltaikmodul aufgebaute Spannung zu entladen. Dann wird der Kurzschluss aufgehoben und das Photovoltaikmodul von der Prüfeinrichtung abgeklemmt. Die Prüfung ist erfolgreich, wenn während die mit dem Isolationsprüfer angelegte Spannung von 1000 V plus der doppelten maximalen Systemspannung während einer Minute kein Durchschlag oder eine Oberflächenspurbildung auftritt. Ferner müssen Module mit einer Fläche von weniger als 0,1 m² einen Isolationswiderstand von nicht weniger als 400 MΩ aufweisen. Module mit einer Fläche über 0,1 m² müssen bei Multiplikation des gemessenen Isolationswiderstands mit der Modulfläche einen Wert von nicht weniger als 40 MΩ * m² aufweisen.

### Prüfung des Isolationswiderstandes unter Benässung

Der Zweck dieser Prüfung ist die Bewertung der Isolation des Moduls unter feuchten Betriebsbedingungen und die Sicherstellung, dass durch Regen, Nebel, Tau oder geschmolzenen Schnee keine Feuchtigkeit an aktive Teile der Modulschaltung gelangt.

Die Prüfeinrichtung umfasst einen Behälter, der eine ausreichende Größe aufweist, um das Modul mit seinem Rahmen in flacher horizontaler Lage aufnehmen zu können. Der Behälter wird mit einer Wasser-Netzmittel-Lösung gefüllt, die folgenden Anforderungen entspricht:
- Widerstand 3500 Ω * cm oder kleiner
- Oberflächenspannung: 0,03 N * m⁻¹ oder kleiner
- Temperatur 22(±3)°C

Der Behälter muss ausreichend hoch mit der Lösung befüllt sein, damit sämtliche Oberflächen des Photovoltaikmoduls mit Ausnahme der Anschlussdose bedeckt werden. Die Prüfvorrichtung umfasst ferner eine Sprühvorrichtung, die dieselbe Lösung enthält, wie der Behälter. Die Prüfeinrichtung umfasst ferner eine Gleichspannungsquelle mit Strombegrenzung, die eine Spannung von 500 V oder die höchste Bemessungsspannung des Systems bereitstellen kann. Außerdem umfasst die Prüfeinrichtung ein Messgerät zur Messung des Isolationswiderstandes.

Während der Durchführung der Prüfung müssen sämtliche Verbindungen repräsentativ für die empfohlene Verkabelung vor Ort sein, und es müssen Vorkehrungen getroffen werden, um sicherzustellen, dass die Kriechströme nicht durch die Verbindung der Messgeräte mit dem Modul entstehen. Die Prüfungsdurchführung verläuft in vier Schritten:
a) Das Modul wird in den Behälter mit der beschriebenen Lösung bis zu einer Tiefe eingetaucht, so dass sämtliche Oberflächen, ausgenommen der nicht für das Eintauchen vorgesehenen Anschlussdose, bedeckt werden. Kabeleinführungen müssen gründlich mit der Lösung besprüht werden. Wenn das Modul mit einer passenden Steckvorrichtung ausgerüstet ist, dann sollte die Steckvorrichtung während der Prüfung eingetaucht sein.
b) Die kurzgeschlossenen Ausgangsklemmen des Moduls werden mit dem Pluspol der Prüfeinrichtung verbunden. Mit einem geeigneten metallischen Leiter wird die Lösung mit dem Minuspol der Prüfeinrichtung verbunden.
c) Die von der Prüfeinrichtung angelegte Spannung wird mit einer Anstiegsgeschwindigkeit, die 500 V/s nicht überschreitet, bis auf 500 V oder die maximale Systemspannung des Moduls, je nachdem welche größer ist, erhöht. Diese Spannung wird für zwei Minuten aufrechterhalten. Anschließend wird der Isolationswiderstand bestimmt.
d) Dann wird die anliegende Spannung auf 0 verringert und die Anschlussklemmen des Prüfgerätes werden kurzgeschlossen, damit die am Modul aufgebaute Spannung entladen werden kann.

Die Prüfung ist bestanden, wenn folgende Anforderungen erfüllt sind: Bei Modulen mit einer Fläche kleiner als 0,1 m² darf der Isolationswiderstand nicht kleiner als 400 MΩ sein. Bei Modulen mit einer Fläche über 0,1 m² darf der gemessene Isolationswiderstand multipliziert mit der Modulfläche nicht kleiner sein als 40 MΩ * m².

### Bestimmung der maximalen Leistung

Diese Prüfung dient dem Zweck, die maximale Leistung des Photovoltaikmoduls vor und nach den entsprechenden Belastungen zu ermitteln. Die Wiederholpräzision der Prüfung ist der entscheidendste Faktor und sollte gewährleistet sein.

Die Prüfeinrichtung umfasst eine Strahlungsquelle, insbesondere natürliches Sonnenlicht, Sonnensimulat der Klasse B oder bevorzugt ein Sonnensimulator nach IEC 60904-9. Ferner umfasst die Prüfeinrichtung ein Photovoltaik-Referenzmodul nach IEC 60904-2 oder IEC 60904-6. Wird ein Sonnensimulator der Klasse B verwendet, muss das Referenzmodul dieselbe Größe aufweisen und die gleiche Zellentechnologie haben wie das zu prüfende Modul. Außerdem umfasst die Prüfeinrichtung eine geeignete Aufnahmeeinrichtung für den Prüfling und das Referenzmodul in einer Ebene, die Senkrecht zur Bestrahlungsrichtung steht. Ferner umfasst die Prüfeinrichtung Mittel zur Überwachung der Temperatur im Prüfling und im Referenzmodul mit einer Messunsicherheit von höchstens ± 1°C und einer Wiederholpräzision von ± 0,5°C. Ferner sind Mittel zur Messung des Stroms von Prüfling und Referenzmodul mit einer auf den Messwert bezogenen Messunsicherheit von höchstens ± 0,2%. Außerdem umfasst die Einrichtung Mittel zur Messung der Spannung von Prüfling und Referenzmodul mit einer auf den Messwert bezogenen Messunsicherheit von höchstens ± 0,2%.

Die Prüfung wird durchgeführt, in dem zunächst die Strom-Spannungs-Kennlinie des Photovoltaikmoduls nach IEC 60904-1 bei einer spezifischen Reihe von Bestrahlungsstärke- und Temperaturbedingungen mit natürlichem Sonnenlicht oder mit einem Sonnensimulator der Klasse B oder besser einem Sonnensimulator, der denen in IEC 60904-9 beschriebenen Anforderungen entspricht, ermittelt. Die Zellentemperatur liegt dabei bevorzugt in einem Bereich zwischen 25°C und 50°C und die Bestrahlungsstärke liegt zwischen 700 W/m² und 1100 W/m². Unter besonderen Umständen, wenn die Photovoltaikmodule für den Betrieb innerhalb eines abweichenden Betriebsbereiches ausgelegt sind, können die Stromspannungskennlinien mit Temperatur und Bestrahlungsstärkewerten gemessen werden, die etwa den erwarteten Betriebsbedingungen entsprechen.

Korrekturen für Temperatur und Bestrahlungsstärke können nach IEC 60891 vorgenommen werden, um Messreihen zu vergleichen, die am selben Modul vor und nach den Umweltprüfungen durchgeführt wurden. Es sollten jedoch alle Anstrengungen unternommen werden, um Messungen der Spitzenleistung unter ähnlichen Betriebsbedingungen sicherzustellen, damit die Größe der Korrektur auf einen kleinen Wert verringert wird, in dem die Messungen sämtlicher Spitzenleistungen an einem bestimmten PV-Modul bei annähernd gleicher Temperatur und Bestrahlungsstärke durchgeführt werden. Die Wiederholpräzision der Messung der maximalen Leistung muss besser als ± 1% sein. Um zu kontrollieren, dass die Prüfmodule gemessen werden, sind Kontrollmodule zu verwenden.

### Beispielhafte Ausführungsform des erfindungsgemäßen Verfahrens

Im Folgenden wird ein erfindungsgemäßes Verfahren beschrieben, das neben dem erfindungsgemäßen Belastungsverfahren auch vor- und nachgeschaltete Prüfungsverfahren umfasst. Die Ausführungen sind als Beispiele aufzufassen, die den Schutzumfang nicht einschränken.

Mit dem Verfahren soll festgestellt werden, ob das PV-Modul den Umgebungsbedingungen intensiver Tierhaltung während der Nutzungszeit standhält. Neben Staub führen verschiedene Gase in der Stallluft hier zu einer erhöhten Belastung. Bei den Gasen kommt Ammoniak (NH₃) als umweltrelevantem Gas die größte Bedeutung zu. Ammoniakemissionen entstehen im Stall, bei der Lagerung und Ausbringung von Wirtschaftsdüngern (Gülle, Jauche oder Festmist). Die Landwirtschaft ist mit 90 bis 95 % Hauptverursacher von Ammoniakemissionen in Deutschland. Diese wirken durch Stickstoff- und Säure-Deposition belastend in Form von Versauerung und Eutrophierung auf die Umwelt.

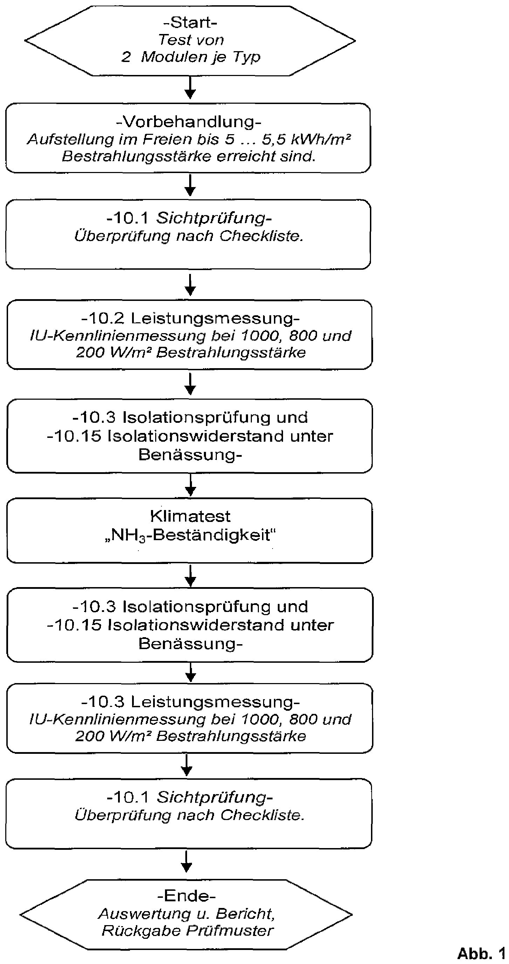

Das Verfahren wird unter Laborbedingungen durchgeführt. Je Typ sind zwei Module zu testen. Das Prüfverfahren umfasst folgende Abschnitte:
a) Vorbehandlung¹
b) Sichtprüfung¹
c) Leistungsmessung - Bestimmung der Höchstleistung²
d) Isolationsprüfung und Isolationswiderstand unter Benässung¹
e) Klimatest unter NH₃ - Atmosphäre (=erfindungsgemäßes Belastungsverfahren)
f) Isolationsprüfung und Isolationswiderstand unter Benässung¹
g) Leistungsmessung - Bestimmung der Höchstleistung²
h) Sichtprüfung¹
Abbildung 1 zeigt die Prüffolge als grafische Übersicht.
¹ nach DIN EN 61215 "Terrestrische kristalline Silizium-Photovoltaik-(PV) Module - Bauarteignung und Bauartzulassung"
² nach DIN EN 61215, erweiterter Umfang, Messung bei Bestrahlungsstärken von: 1000, 800 und 200 W/m²

Der Prüfabschnitt e) "Klimatest unter NH₃ - Atmosphäre" stellt die Belastung für die Prüflinge dar. Folgende Parameter sind dabei in der Prüfkammer einzustellen:
- Zeit: 1500 h,
- Temperatur: 70 °C,
- relative Feuchte: 70 %,
- Ammoniakkonzentration: 750 ppm

### Prüfabschnitte nach DIN EN 61215

Die Anforderungen für die Prüfabschnitte a) bis c) und e) bis f) sind in der Norm DIN EN 61215 beschrieben (die Nummern 10.x geben den jeweiligen Gliederungspunkt der DIN EN 61215 "Terrestrische kristalline Silizium-Photovoltaik-(PV) Module - Bauarteignung und Bauartzulassung" an).

Folgende technische Ausstattung wird dazu eingesetzt:
Vorbehandlung (Prüfabschnitt a)
Die Module werden natürlichem Sonnenlicht solange ausgesetzt bis 5,0 bis 5,5 kWh/m² Einstrahlung erreicht sind. Zur Durchführung werden alle Modul-Prüfmuster zeitgleich auf dem Gestell (Neigung 30°, ∼ Im Bodenabstand, nach Süden ausgerichtet, mit mittig integriertem Strahlungsmessgerät) auf dem Kabinentesthügel des Testzentrums aufgestellt. Die Einstrahlung wird mit einem Pyranometer gemessen und von einem PC erfasst.
Sichtprüfung 10.1 (Prüfabschnitt b und h)
Die Sichtprüfung wird bei einer Beleuchtungsstärke von > 1000 Lux entsprechend der in der Norm genannten Checkliste durchgeführt.
Leistungsmessung 10.2 (Prüfabschnitt c und g)
Zur IU-Kennlinienmessung wird ein Labormessplatz mit Class-A2-Niveau mit folgender Spezifikation eingesetzt:
   - IU-Curvetracer vom Typ cetisPV-CT-L1 mit einem maximalen Messbereich von 150 V/10 A;
   - vollelektronisch, adaptiv geregelter Class-A Xenon-Flasher cetisPV-XF2/M zur Sonnensimulation, mit Monitorzelle und Mess-PC.
Isolationsprüfung 10.3 und Prüfung des Isolationswiderstandes unter Benässung 10.15 (Prüfabschnitt d und f)
Für den Test unter Benässung wird ein spezieller Flachbehälter (2090 x 1490 mm) genutzt. Das Wasser-Netzmittel wird aus folgenden Bestandteilen gemischt: 19 l VE-Wasser, 1,25 ml Flächenreinigungsmittel ("Mucasol") und 1,6 g NaCl. Beim Test ist das Netzmittel in dem Flachbehälter auf eine Temperatur von 22±3°C zu temperieren.

Es werden folgende Geräte eingesetzt:
- Multitester für Geräte und Anlagen, Typ "C.A 6160", Fa. CHAUVIN ARNOUX GROUP, ID-Nr.:4.99.02.00;
- Vollelektronisches Hochspannungsprüfgerät, Typ "SHV 85 92-1G", Fa. ELABO GmbH, ID-Nr.: 4.18.01.00

### KLIMATEST "NH₃-BESTÄNDIGKEIT"

Zur Prüfung der "NH₃-Beständigkeit" ist eine Prüfkammer einzusetzen die folgende Anforderungen erfüllen muss:
- gleichmäßige Temperierung bzw. Klimatisierung des Prüfraumes,
- gleiche Bedingungen für alle eingebrachten Prüfobjekte,
- optimierte Luftführung bei allen Prüfraumparametern,
- geringe Abweichungen der Parameter Temperatur, relative Luftfeuchtigkeit und Ammoniakkonzentration von den eingestellten Sollwerten,
- Messung der Modultemperatur an mindestens zwei Modulen,
- Dokumentation der Istwerte der eingestellten Prüfraumparametern und der Modultemperaturen,
- umgebungsunabhängige Steuerung,
- die Prüfraumgröße ist in Abhängigkeit von der Modulgröße und deren Anzahl festzulegen,
- Eignung für einen störungsarmen Dauereinsatz von bis zu einem Jahr,
- hohe Beständigkeit der eingesetzten Materialien gegenüber Ammoniak,

### Ausführungsbeispiel: NH₃-Begasungskammer Testzentrum

Die NH₃-Begasungskammer besteht aus einer wärmegedämmten Prüfkammer mit einer separaten mikroprozessorgesteuerten Steuerung- und Überwachungseinheit mit folgenden Hauptkenndaten:
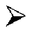 Prüfraum:
   Werkstoff: Edelstahl,
   Abmessungen: Höhe: 1500 mm, Breite: 1500 mm, Tiefe: 2000 mm,
   Volumen: 4500 l,
   Gaszuführung: an der linken Längsseite,
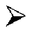 Außengehäuse:
   galvanisch verzinktes Stahlrahmen mit Faserdämmstoff gedämmt und einer Verkleidung aus beschichtetem Blech, Tür mit Rechtsanschlag und 3-facher Handverriegelung

Zur Aufnahme der Module wird ein Gestell genutzt. Die Module werden mit der Längsseite nach unten leicht gekippt (bis zu 10°) und mit einer Bodenfreiheit von ca. 100 mm eingestellt. Es können maximal 6 Module eingebracht werden.

Die Prüfkammer stellt eine Begasungskammer mit voreinstellbarer Temperatur, Feuchtigkeit und NH₃-Gaskonzentration dar. Die Prüfraumparameter können in folgenden Bereichen eingestellt werden:
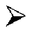 Temperatur in der Kammer: 20 bis 80 °C,
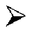 rel. Feuchtigkeit einströmendes Gas: 10 bis 80 %,
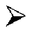 NH₃-Gaseintrag in die Kammer: 0 bis 0.72 g/min,

Zur Dokumentation der Prüfraumparameter wird ein PC-Datenerfassungssystem eingesetzt.

Die NH₃-Begasungskammer besteht aus folgenden Hauptbaugruppen:
1. Heizsystem
   Das Heizsystem besteht aus zwei unabhängigen Heizsystemen, einem Warmwasserheizsystem mit Rippenrohrheizkörper und einem Register von speziellen Elektroheizelementen mit Lüfter (15 Stück). Der Heizkörper und sämtliche Heizlüfter sind an der Kammerrückseite montiert.
   Die Wasserspeisung erfolgt vom Trinkwassernetz über einen Edelstahl-Ionenaustauscher vom Typ "SG-2800 SK".
2. Gaszuführsystem
   Die Gaszuführung erfolgt geregelt.
   Für die Erzeugung der Feuchtluft wird Druckluft (aus dem Betriebsnetz) im beheizten Wasserbehälter befeuchtet mit Trockenluft gemischt. Für die Dosierung von feuchter bzw. trockener Luft werden Mass-Flow-Controller für Gase eingesetzt. Ammoniak wird aus einer Gasflasche über Druckminderer, Filter, Rückschlagventil durch einen Mass-Flow-Controller für Gase (ammoniakbeständig) dosiert zur Verfügung gestellt.
   Beide Gasströme werden anschließend gemischt und der Kammer zugeführt.
3. Messsysteme
   Für die Messung der Gastemperatur- und feuchte wird ein für die Umgebungsbedingungen geeignetes Messsystem von Fa. Vaisalla verwendet. Zur Überwachung der NH₃-Gaskonzentration in der Prüfkammer wird ein Infrarot-Analysator mit beheizter Messgaszuführung vom Typ "FT-IR Analysator GASMET DX-4000", Fa. ansyco eingesetzt.

### Beschreibung der Abbildungen

Die Abbildung 1 zeigt eine Prüffolge bei einem Verfahren zur Ermittlung der Belastbarkeit eines PV-Moduls. Anmerkung: Die (10.x bzw. 10.xx) vor einem Prüfabschnitt geben den Gliederungspunkt der DIN EN 61215 "Terrestrische kristalline Silizium-Photovoltaik-(PV) Module - Bauarteignung und Bauartzulassung" an.

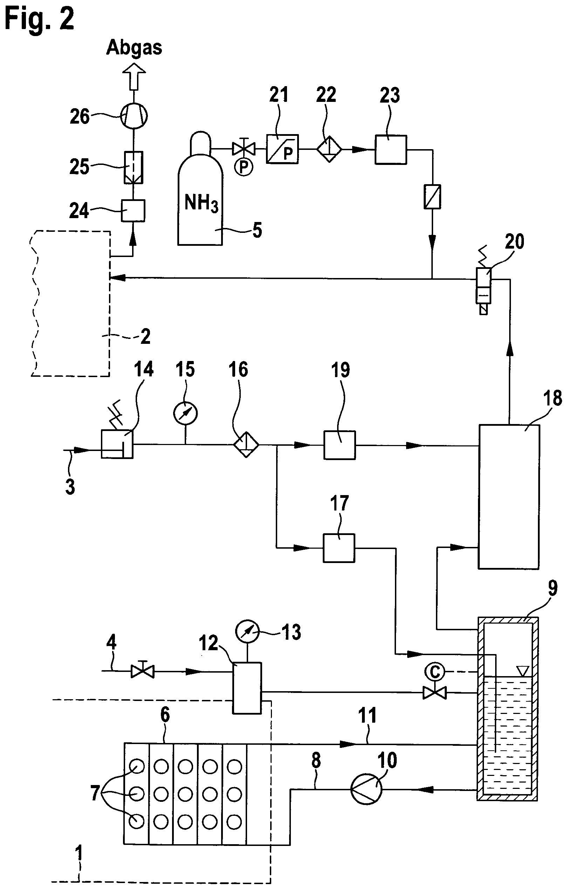

Die Abbildung 2 zeigt eine Vorrichtung zur Durchführung des erfindungsgemäßen Verfahrens zur Belastung von Photovoltaikmodulen. Die Abbildung zeigt eine Rückwand 1 und eine Seitenwand 2 der Probenkammer, die der besseren Darstellbarkeit halber entkoppelt gezeigt sind, gleichwohl Teile derselben Probenkammer sind, eine Druckluftzufuhr 3, eine Trinkwasserzufuhr 4 sowie eine Ammoniakquelle 5. Die Rückwand 1 der Probenkammer ist mit einem Rippenrohrheizkörper 6 versehen, der seinerseits Heizlüfter 7 aufweist, um den Probenraum auf die verfahrensgemäß erforderliche Temperatur aufzuheizen und auf dieser Temperatur zu halten. Der Rippenrohrheizkörper 6 wird über einen Vorlauf 8 aus einem beheizten Wasserbehälter 9 gespeist. Nachdem das heiße Wasser aus dem beheizten Wasserbehälter 9 über eine Umwälzpumpe 10 durch den Vorlauf 8 in den Rippenrohrheizkörper 6 gelangt ist, fließt es durch den Rücklauf 11 zurück in den beheizten Wasserbehälter 9. Der beheizte Wasserbehälter 9 wird über die Trinkwasserzufuhr 4 gespeist, wobei das Trinkwasser über einen Ionenaustauscher 12 mit integriertem Leitfähigkeitsmessgerät 13 fließt. Der beheizte Wasserbehälter 9 dient ferner der Anfeuchtung von Luft, die über die Drucklufteinspeisung 3 mit nachgeschaltetem Druckregler 14 über ein Manometer 15, einen Filter 16 und einen Massflowcontroller 17 in den beheizten Wasserbehälter gelangt. Sodann wird die dadurch angefeuchtete Luft aus dem beheizten Wasserbehälter 9 in den beheizten Gasmischer 18 überführt, wo die feuchte Luft mit trockener Luft gemischt wird, die ebenfalls über die Drucklufteinspeisung 3, den Druckregler 14, das Manometer 15 und den Filter 16 sowie weiter über einen Massflowcontroller 19 in den beheizten Gasmischer 18 gelangt. Aus dem beheizten Gasmischer 18 gelangt die Luft, die nun die erforderliche Luftfeuchtigkeit aufweist über ein Magnetventil 20 und die Probenraumseitenwand 2 in den Probenraum. Die Luftfeuchtigkeit lässt sich durch Steuerung der zugeführten Luftmenge über den Massflowcontroller 17 für die feuchte Luft und den Massflowcontroller 19 für die trockene Luft nach Belieben einstellen. Hinter dem Magnetventil 20, jedoch vor der Seitenwand des Probenraumes 2 wird die Luft mit Ammoniak versetzt. Der Ammoniak stammt aus der Ammoniakquelle 5, aus der der Ammoniak zunächst über einen Druckminderer 21, einen Filter 22 und einen dritten Massflowcontroller 23 mit der Luft gemischt wird. Auf diese Weise lässt sich nur durch Kontrolle der drei Massflowcontroller 17, 19 und 23 die Zusammensetzung der Atmosphäre betreffend Luftfeuchtigkeit und Ammoniakgehalt einstellen. Die Abluft des Probenraumes wird dann über einen Katalysator 24, einen Kondensatabscheider 25 und einen Abluftventilator 26 ins Freie geleitet.

### Bezugszeichenliste

- 1: Rückwand
- 2: Seitenwand
- 3: Druckluftzufuhr
- 4: Trinkwasserzufuhr
- 5: Ammoniakquelle
- 6: Rippenrohrheizkörper
- 7: Heizlüfter
- 8: Vorlauf
- 9: Wasserbehälter
- 10: Umwälzpumpe

- 11: Rücklauf
- 12: Ionenaustauscher
- 13: Leitfähigkeitsmessgerät
- 14: Druckregler
- 15: Manometer
- 16: Filter
- 17: Massflowcontroller
- 18: Gasmischer
- 19: Massflowcontroller
- 20: Magnetventil

- 21: Druckminderer
- 22: Filter
- 23: Massflowcontroller
- 24: Katalysator
- 25: Kondensatabscheider
- 26: Abluftventilator

## Patentansprüche

1. Verfahren zur Belastung von Photovoltaikmodulen, wobei ein Photovoltaikmodul in eine Probenraumkammer eingebracht wird, die während eines Belastungszeitraums von 24 bis 5000, vorzugsweise 500 bis 5000 Stunden, eine Atmosphäre mit Eigenschaften aufweist, welche diejenigen Einflüsse simulieren, denen das Photovoltaikmodul während seines Einsatzes ausgesetzt sein kann, und wobei unter diesen Eigenschaften folgende sind:
a. eine Temperatur im Bereich von 50°C bis 95°C,
b. eine mittlere, relative Luftfeuchtigkeit von 60% bis 90% und
c. eine Ammoniakkonzentration von 250 bis 50.000 ppm, vorzugweise bis 5000 ppm.

2. Verfahren gemäß Anspruch 1, wobei die Temperatur 60°C bis 80°C beträgt.

3. Verfahren nach Anspruch 1 oder 2, wobei die Ammoniakkonzentration 500 bis 2000 ppm beträgt.

4. Verfahren nach einem oder mehreren der vorhergehenden Ansprüche, wobei die mittlere, relative Luftfeuchtigkeit 65% bis 75% beträgt.

5. Verfahren nach einem oder mehreren der vorhergehenden Ansprüche, wobei wenigstens eine Isolationsprüfung durchgeführt wird.

6. Verfahren nach einem oder mehreren der vorhergehenden Ansprüche, wobei wenigstens eine Prüfung des Isolationswiderstandes unter Benässung durchgeführt wird.

7. Verfahren nach einem oder mehreren der vorhergehenden Ansprüche, wobei wenigstens eine Bestimmung der maximalen Leistung durchgeführt wird.

8. Verfahren nach einem oder mehreren der vorhergehenden Ansprüche, wobei das Volumen der Probenraumkammer 2500 bis 7000 l beträgt.

## Claims

1. Method for applying stress to photovoltaic modules,
wherein a photovoltaic module is introduced into a sample chamber, which, for a stress application period of 24 to 5000, preferably 500 to 5000 hours, has an atmosphere with properties simulating the influences to which the photovoltaic module may be exposed during use, and wherein these properties include the following:
a. a temperature in the range of 50 °C to 95 °C,
b. an average relative air humidity of 60 % to 90 %, and
c. an ammonia concentration of 250 to 50,000 ppm, preferably to 5000 ppm.

2. Method according to claim 1, wherein the temperature is 60 °C to 80 °C.

3. Method according to either claim 1 or claim 2, wherein the ammonia concentration is 500 to 2000 ppm.

4. Method according to one or more of the preceding claims, wherein the average relative air humidity is 65 % to 75 %.

5. Method according to one or more of the preceding claims, wherein at least one insulation test is carried out.

6. Method according to one or more of the preceding claims, wherein at least one test of the insulation resistance is carried out wet.

7. Method according to one or more of the preceding claims, wherein at least one determination of the maximum power is carried out.

8. Method according to one or more of the preceding claims, wherein the volume of the sample chamber is 2500 to 7000 1.

## Revendications

1. Procédé destiné à appliquer des contraintes sur des modules photovoltaïques, dans lequel un module photovoltaïque est introduit dans une chambre d'essai qui présente, pendant une durée d'application de contraintes de 24 à 5 000 heures, de préférence de 500 à 5 000 heures, une atmosphère avec des propriétés qui simulent les influences auxquelles le module photovoltaïque peut être exposé pendant son utilisation, et dans lequel parmi ces propriétés on retrouve les suivantes :
a. une température dans la plage de 50°C à 95 °C,
b. une humidité relative moyenne de l'air de 60 % à 90 % et
c. une concentration d'ammoniac de 250 à 50 000 ppm, de préférence jusqu'à 5 000 ppm.

2. Procédé selon la revendication 1, dans lequel la température est comprise de 60°C à 80 °C.

3. Procédé selon la revendication 1 ou 2, dans lequel la concentration d'ammoniac est comprise de 500 à 2 000 ppm.

4. Procédé selon une ou plusieurs des revendications précédentes, dans lequel l'humidité relative moyenne de l'air est comprise de 65 % à 75 %.

5. Procédé selon une ou plusieurs des revendications précédentes, dans lequel au moins un essai d'isolation est réalisé.

6. Procédé selon une ou plusieurs des revendications précédentes, dans lequel au moins un essai de résistance de l'isolation en conditions humides est réalisé.

7. Procédé selon une ou plusieurs des revendications précédentes, dans lequel au moins une détermination de la puissance maximale est réalisée.

8. Procédé selon une ou plusieurs des revendications précédentes, dans lequel le volume de la chambre d'essai est compris de 2 500 à 7 000 l.
